**Europäisches Patentamt**

(19) **European Patent Office**

**Office européen des brevets**

(11) Publication number : **0 312 344 B1**

## (12) EUROPEAN PATENT SPECIFICATION

(45) Date of publication of patent specification :
**11.03.92 Bulletin 92/11**

(51) Int. Cl.⁵ : **B01J 29/38**

(21) Application number : **88309580.4**

(22) Date of filing : **13.10.88**

(54) **Catalyst regeneration with flue gas.**

(30) Priority : **13.10.87 US 107709**

(43) Date of publication of application :
**19.04.89 Bulletin 89/16**

(45) Publication of the grant of the patent :
**11.03.92 Bulletin 92/11**

(84) Designated Contracting States :
**BE DE FR GB IT NL**

(56) References cited :
**EP-A- 0 134 924**
**EP-A- 0 162 251**
**FR-A- 2 350 140**
**US-A- 2 391 327**
**US-A- 4 471 063**

(73) Proprietor : **MOBIL OIL CORPORATION**
**3225 Gallows Road**
**Fairfax, Virginia 22037-0001 (US)**

(72) Inventor : **Owen, Hartley**
**5, Riverview Terrace**
**Belle Mead New Jersey 08502 (US)**
Inventor : **Harandi, Mohsen Nadimi**
**12, Catbird Court**
**Lawrenceville New Jersey 08648 (US)**

(74) Representative : **Jones, Alan John et al**
**CARPMAELS & RANSFORD 43 Bloomsbury**
**Square**
**London, WC1A 2RA (GB)**

## Description

This invention relates to a process for regenerating catalysts used in fixed bed conversion processes, particularly those involving hydrocarbons.

The reaction of hydrocarbon feedstocks in the presence of catalysts to produce gasoline range products, diesel fuels, aromatics, or other valuable fuels and chemicals is frequently carried out using fixed catalyst beds at elevated temperature. These catalyst beds require periodic regeneration of the catalyst, commonly conducted by contacting the catalyst with an oxygen containing gas at elevated temperature in order to remove by combustion those coke and carbonaceous deposits responsible for the deactivation of the catalyst. For continuous fixed bed catalytic processes, the process design generally incorporates at least two fixed bed catalyst reactors which are alternately operated as a regeneration zone and conversion zone; the catalyst is undergoing oxidative regeneration in one zone while the other serves for converting the feedstock to the desired product. In these processes provision is routinely made for the recirculation of the regeneration gas stream, which requires recompression of the gas, makeup air compressor controls, filters and heat exchangers as needed to reconstitute the regenerator gas stream and recycle that stream under the precise conditions of temperature, pressure and composition needed to oxidatively remove the deleterious carbonaceous deposits on the catalyst. Examples of such processes include reforming, catalytic hydrodesulfurization, catalytic dehydrogenation, conversion of methanol to gasoline and olefin upgrading, as to gasoline and distillate.

In order to facilitate the control of the composition of the gas, the flue gas generally used for regeneration is recycled. US-A-2,391,327 discloses processes for the regeneration of solid contact material used for promoting hydrocarbon conversion reactions using flue gas where the flue gas is generated in a regenerator gas combuster, recycled through heat exchange zones and filters and incorporates instrumentation to sense and adjust the composition of chemicals in the flue gas to the preferred ratios. The disclosure is illustrative of the complexities associated with the art of fixed bed catalyst regeneration using flue gas recycle and the degree of treatment and processing required for a recycle flue gas stream. Such treatment requires a significant investment in capital equipment and can be the source of inefficiencies in the overall process. Other examples in the prior art such a US-A-2,278,509 and -2,215,868 are further illustrations of the problems posed by the requirement for substantial capital investment for heat exchange, recycle gas compression and chemical composition control in order to provide a recycle flue gas stream suitable for use in catalyst regeneration.

The added costs and inefficiencies incurred in the course of providing a suitable recycle flue gas stream have represented a substantial problem and challenge to workers in the field of fixed bed catalyst regeneration.

It has been discovered that an available flue gas can be employed as the catalyst regenerating gas stream in a once-through configuration consolidating flue gas and regenerating gas treatment steps. The process of this invention uses available flue gas heat to preheat feedstock and oxidatively regenerate catalyst in a manner that is efficient and economically advantageous without requiring recycle of the regenerator gas stream.

According to the present invention a process for regenerating a zeolite catalyst deactivated by coke deposition in a multiple-zone fixed-bed process for the conversion of olefins to gasoline and distillate in which each zone may serve for feed conversion or catalyst regeneration, employing as source of regeneration gas the flue gas continuously produced from the regenerator of an independently-operating fluid catalytic cracking unit, comprises cooling a portion of said flue gas by indirect heat exchange with said feed, contacting deactivated catalyst under regeneration conditions in a zone serving for catalyst regeneration with particle-free regeneration gas which comprises part of said cooled flue gas, combining the effluent gas from said zone with the remaining part of said cooled flue gas and the remaining portion of the uncooled flue gas, and discharging the combined gasses without recycling.

The oxygen content of said flue gas, before its use as regeneration gas, is adjusted by addition to it of air, an inert gas such as nitrogen, or fuel gas, to between 0.1 and 1.5% volume, any addition of air to the flue gas being conveniently effected by means of the air compressor forming part of the independent installation. Before cooling, said flue gas is usually at a temperature of 593 to 788°C and a pressure of 2.4 to 3.8 bar, while the regeneration gas will be at a temperature of 371 to 538°C and a pressure of 2.05 to 3.43 bar. Before discharge, the combined gases are conveniently cooled by means of the flue gas cooler forming part of the independent installation.

While one of the fixed-bed zones serves for the regeneration another may serve for conversion of feed preheated by heat exchange with the flue gas. The zeolite will typically be one having a constraint index of 1 to 12, and preferably has the structure of zeolite ZSM-5.

The objects of the present invention are achieved in a process using an available flue gas stream, such as from an oxidative catalyst regeneration zone of the catalyst regeneration vessel of a fluid catalytic cracking process, to provide heat to generate steam or preheat the feed stream to the process reactor of a fixed bed catalyst conversion process, such as an olefin-to-gasoline-and-diesel process, then to oxidatively regenerate the catalyst in a fixed bed catalyst regenerator. Following these steps the flue gas streams are combined and treated in the flue gas cooler and electrostatic precipitator before discharging to the atmosphere without recycling.

The invention man be carried out in a once through oxidative flue gas integrated multiple fixed bed continuous catalytic conversion and catalyst reactor system, comprising at least two fixed bed catalyst zones operatively connected for sequential conversion of a lower aliphatic hydrocarbon or an oxygenates feed stream and catalyst regeneration, means for providing a hot, particulate free oxidative flue gas operatively connected to said fixed bed catalyst zones for sequential catalyst regeneration, means, connected to said means for providing hot flue gas and to a feed stream source, for indirect heat transfer between said hot flue gas and said feed stream, said means operatively connected to sequentially provide preheated feed and lower temperature flue gas to said catalyst zones, conduit means sequentially connecting said catalyst zones and connecting the means for providing hot flue gas with a cooler to transfer and cool excess hot flue gas and regenerator catalyst zone effluent gas prior to discharge, and conduit means sequentially connected to said catalyst zones to transfer conversion products of hydrocarbon or oxygenates catalytic conversion. The means for providing a hot oxidative flue gas suitably comprises a fluid catalytic cracking catalyst regenerator connected to a means for admixing oxygen or inert gas or fuel gas with the flue gas to increase or decrease its oxygen content.

The process may be put into practice by first withdrawing a portion of an FCC flue gas stream and adjusting the composition of that stream to provide an oxidising flue gas stream essentially free of FCC catalyst fines and useful for catalyst regeneration. The portion so withdrawn is partially cooled by generating steam or heat exchange with the feedstock stream to the fixed bed conversion process reactor. The heated, e.g. hydrocarbon, feedstock stream is passed to the process reactor over active catalyst particles under such conditions as necessary to convert the feedstock stream to hydrocarbon products which are then separated. A portion of the partially cooled oxidising flue gas stream, after partial cooling, is contacted with deactivated catalyst having carbonaceous deposits thereon in the swing or alternate catalyst oxidative regenerating reactor. The effluent gas stream from the catalyst regenerating reactor is combined with the remaining portion of partially cooled oxidising flue gas stream and the undiverted portion of the flue gas stream. The combined streams are cooled in the flue gas cooler, treated to remove particulates and discharged to the atmosphere, without recycling.

Adjusting the composition of the portion of the flue gas stream, such as from the FCC regeneration zone, to provide an oxidising flue gas stream is accomplished by mixing the stream with air, nitrogen or fuel gas as required to provide an appropriate oxidising stream composition. The air stream for such mixing is further provided by air from the main air blower outlet employed in connection with providing combustion air for the FCC oxidative catalyst regeneration zone.

## BRIEF DESCRIPTION OF THE DRAWINGS

Figure 1 is a process flow diagram illustrating the integration of FCC regenerator flue gas treatment with the catalyst regeneration section of the Mobil olefin-to-gasoline-and-distillate (MOGD) process.

Figure 2 is a schematic diagram showing the MOGD process configuration.

Catalyst regeneration in FCC is performed oxidatively and provides a source of flue gas for integration with MOGD to regenerate the catalyst employed in that process.

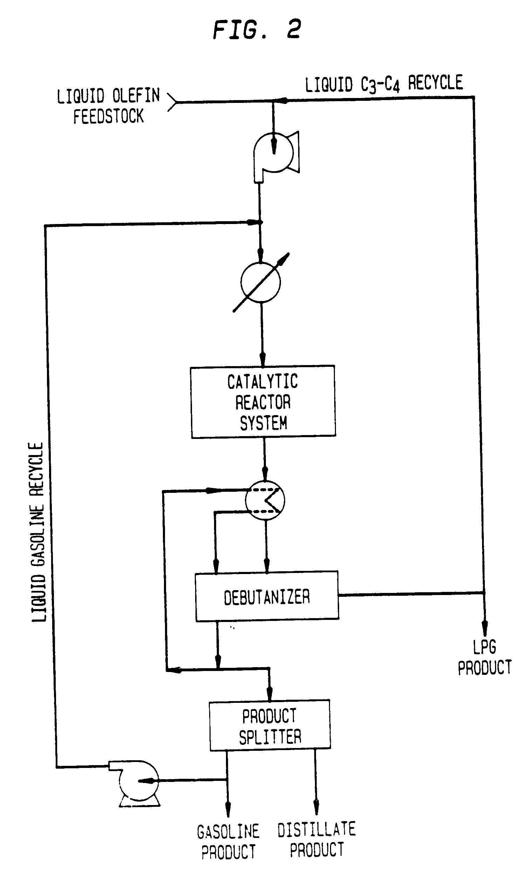

For MOGD, the flow diagram of Figure 2 of the drawing represents the overall process. The olefinic feedstock is usually supplied as a liquid stream under moderate superatmospheric pressure and warm ambient temperature. Ordinarily, the feedstock is substantially below the process reactor pressure, and may be combined with recycled liquid diluent which may be rich in olefinic gasoline of $C_3$-$C_4$ alkanes at similar temperature and pressure. Following pressurisation of the combined olefin-recycle and/or gasoline feedstreams, it may be passed through the catalytic reactor system, which includes multiple fixed bed reactors operatively connected with the heat exchange system, as described later. The reactor effluent may be cooled by heat exchange with a debutanizer bottoms fraction. A condensed debutanizer overhead stream is recovered for recycle and the heavier hydrocarbons obtained by oligomerisation of the feedstream are fractionated in a product splitter unit to yield a $C+_{10}$ distillate fraction (330°F (166°C) + boiling point) and a $C_5$-$C_9$ gasoline fraction (boiling range of 125 to 330°F (52 to 166°C) in varying amount.

Since the gasoline product comprises a major fraction of unsaturated aliphatic liquid hydrocarbons, it may be recovered and hydrotreated to produce motor fuel if desired. Optionally, all or a portion of the olefinic gasoline range hydrocarbons from the splitter unit may be recycled for further conversion to heavier hydrocarbons in the distillate range. This may be accomplished by combining the recycle gasoline with lower olefin feedstock and diluent prior to heating the combined streams.

Process conditions, catalysts and equipment suitable for use in the MOGD process are described in US-A-4,456,799, 3,960,978, 4,021,502, and 4,150,062.

Recent developments in zeolite technology have provided a group of medium pore siliceous materials having similar catalytic applications, possessing a constraint index in the range 1 to 12. Most prominent among these intermediate pore size zeolites is ZSM-5, which is usually synthesised with Bronsted acid active sites and may incorporate a tetrahedrally coordinated metal, such as Al, Ga, or Fe, within the zeolitic framework. These zeolites are favoured for acid catalysis. However, the advantages of ZSM-5 structures may be utilised by employing highly siliceous materials or crystalline metallosilicate materials, having varying degrees of acidity. ZSM-5 is defined by its x-ray diffraction data, set forth in US-A- 3,702,866.

The acidic medium pore zeolite-type catalyst materials suitable for use in the MOGD process are effective in oligomerising lower olefins, especially propene and butene, to higher hydrocarbons. The unique characteristics of acid ZSM-5 catalyst are particularly suitable for use in the MOGD system. Other members of the class of zeolites for use in MOGD are exemplified by ZSM-5/ZSM-11, ZSM-11, ZSM-12, ZSM-23, ZSM-35, ZSM-38 and ZSM-48.

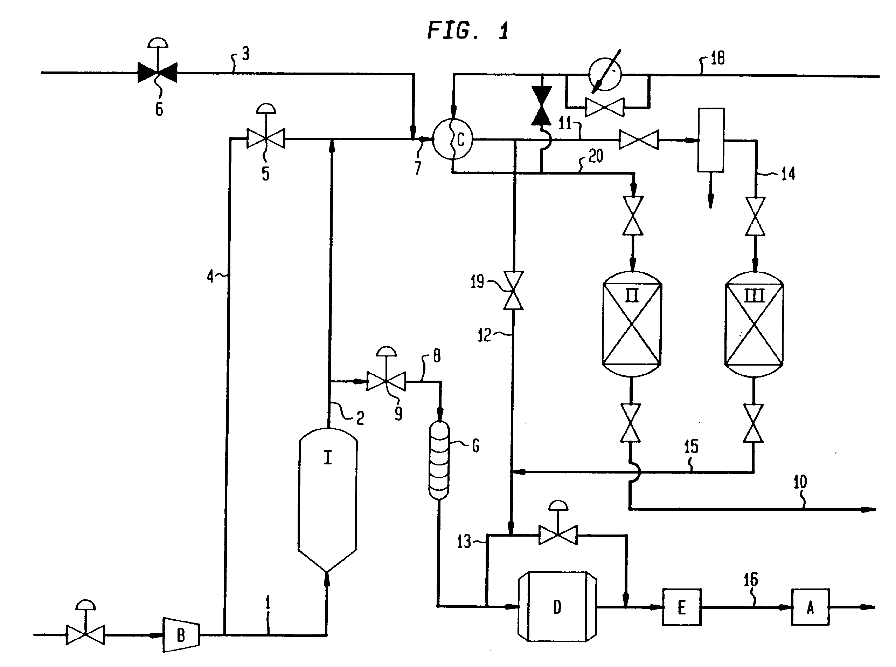

In figure 1, (I) is a fluid catalytic cracking regenerator wherein catalyst is received for oxidative regeneration from the cracking unit through conduits not shown. Combustion air is supplied to the unit through conduit 1 from the FCC regenerator air compressor B. As it is passed in contact with hot circulating catalyst in the regenerator vessel (I), the combustion air burns off coke and carbonaceous deposits on the catalyst and exits the reactor through conduit 2 generally at a temperature between 1100 and 1450°F (593 and 788°C), but preferably about 1350°F (732°C) and a pressure between 20 and 40 psig (2.4 and 3.8 bar), but preferably about 30 psig (3.1 bar). Typically the composition of the exiting flue gas is low with respect to oxygen as a result of the combustion reaction and consists primarily of nitrogen, carbon dioxide and carbon monoxide. In addition to the aforementioned components, the flue gas contains substantial amounts of water vapor representing about 10 volume percent of the flue gas. The water partial pressure in the flue gas is about 3-5 psia (0.21-0.34 bar). If required the water partial pressure can be reduced to about 1 psia (0.07 bar) by cooling the flue gas and removing the condensed water before using the flue gas for fixed bed regeneration. The composition of the flue gas exiting the FCC regenerator through conduit 2, to the extent that it is depleted in oxygen and enriched in reducing gases such as carbon monoxide, departs from the preferred composition of a catalyst regeneration gas useful for the oxidative regeneration of catalysts used in fixed bed hydrocarbon conversion processes. To burn off carbonaceous deposits on those catalysts, a regenerator gas stream with a useful oxygen content is required. Therefore, in the instant invention, a provision is made to modify the composition of the flue gas either through dilution with nitrogen, or addition of fuel gas, such as refinery gas, to reduce oxygen content, through conduit 3 or by the addition of air through conduit 4 as provided from the FCC regenerator air compressor unit B. Under flue gas conditions, the addition of fuel gas thereto results in auto-ignition, consuming oxygen to an appropriate, predetermined concentration. Suitable valves and controls 5 and 6 are included to achieve the compositional changes as may be required in the flue gas.

Conventionally, the flow of flue gas exiting an FCC catalyst regenerator through conduit 2 is substantially in excess of the amount of gas that is required as a source of regenerator gas for fixed bed catalytic hydrocarbon conversion processes, particularly when the oxygen content of that gas has been augmented with air from the FCC air compressor. Further, the total flue gas flow cannot exceed the maximum pressure drop that can be tolerated through the MOGD regenerator system. Therefore, excess flue gas is sent 8 through the FCC flue gas processing system consisting of pressure control valve 9, orifice chamber G, flue gas cooler D, electrostatic precipitator E and stack A. That quantity of FCC regenerator flue gas not required as a source of MOGD catalyst regenerator gas is withdrawn through conduit 12 and associated valving 19 and passed to an FCC flue gas cooler while a typically minor portion of said flue gas is treated as described heretofore and constituted as a regenerator gas at a temperature between 1100 and 1450°F (593 and 788°C) but preferably about 1350°F (732°C) and a pressure of 20 to 40 psig (2.4 to 3.8 bar) but preferably 30 psig (3.1 bar). The FCC flue gas derived regenerated gas stream is passed by conduit 7 into a heat exchanger C to generate steam or for indirect heat transfer to the MOGD process feed stream entering the heat exchanger through conduit 18. Before entering the MOGD regenerator, particulates are removed from the flue gas stream, typically by filtration.

In the process side MOGD reactor (II) the olefinic feedstock, passed by conduit 20, is contacted with a fixed bed zeolite-type catalyst to produce predominantly gasoline or distillate products which are carried from the reactor by conduit 10, processed by heat exchange and separation techniques to produce the products, all as described in the aforenoted references.

The MOGD regenerator gas derived from flue gas exits heat exchanger C through conduit 11 at a temperature between 700 and 1000°F (371 and 538°C) and a pressure between 15 and 35 psig (2.05 and 3.4 bar) but preferably about 25 psig (2.7 bar). That volume of flue gas derived regenerator gas in excess of the amount required for MOGD catalyst regeneration is passed through conduit 12 to bypass the MOGD swing reactor operating in a catalyst regeneration mode and into conduits 13 and 8 to the FCC flue gas cooler D. The flue gas derived regenerator gas passing through conduit 11 is filtered and passed through the regenerator reactor (III) through conduit 14 at a temperature preferably about 700-950°F (371-510°C) and a pressure preferably about 23 psig (2.6 bar). Zeolite catalyst in the fixed bed regenerator reactor is then regenerated under oxidative regeneration conditions as described in the aforenoted referenced patents. The regenerator gas effluent stream is passed from the reactor through conduit 15 and to the FCC flue gas cooler through conduit 13 where the consolidated or combined flue gas and regenerator gas streams are cooled, electrostatically treated to remove suspended particles in the electrostatic precipitator E and conducted to stack A through conduit 16 for discharge to the atmosphere.

A surprising discovery of the instant invention is that the nitrogen compounds typically present in flue gas do not permanently poison the MOGD catalyst. It is known that nitrogen compounds, such as ammonia, deactivate by adsorption on the catalyst, but when the regenerator temperature is raised to about 950°F (510°C) nitrogen compounds are desorbed and catalyst activity is regained, as practised herein.

A key element of the present invention is the adaptability of FCC regenerator flue gas for use as a catalyst regenerator gas for catalytic hydrocarbon conversion processes such as MOGD, resulting in maximum utilisation of commonly useful equipment and the energy resources in the FCC catalyst regenerator flue gas stream. In particular, it is well known that zeolite-type catalysts used in fixed bed conversion processes within the purview of the invention are sensitive to the water partial pressure in the regenerator gas stream. It is also well known that water vapor can react with zeolite catalysts hydrothermally during regeneration to substantially alter catalyst activity and render the catalyst less effective for the intended conversion reaction. In the face of this deleterious effect of water vapor on the catalyst during catalyst regeneration it is a surprising discovery that FCC regenerator flue gas can be used as catalyst regenerator gas since that flue gas typically contains approximately 10 volume percent water. However, in the preferred practice of the invention water is not removed from flue gas prior to use for fixed-bed catalyst regeneration, since the regeneration system pressure is several times lower than the conventional recirculating regeneration system pressure and can therefore tolerate higher water concentration in the regeneration gas.

Another distinguishing aspect of the present invention is the utilisation of regenerator flue gas to preheat the feedstock stream to the fixed-bed process, resulting in a considerable advantage in energy conservation. The preheating step typically is conducted following the treatment of the flue gas with nitrogen or air to provide an oxidative regenerator gas stream, but the sequence of these steps may be reversed.

Of particular advantage in the present invention is the discovery of the adaptability of elements of an independent regenerator installation to dual usage with fixed-bed catalyst regeneration and the compatibility of independently-originating flue gas with a once-through design for fixed-bed catalyst regeneration. Substantial savings in plant cost are realized by eliminating the regeneration recycle gas compressor, the make-up air compressor, several heat exchangers and other vessels that are required as part of a conventional fixed-bed regeneration process design. FCC equipment elements that can be used in a dual function include the FCC regenerator main air blower, the FCC flue gas cooler and all of the associated stack gas clean-up equipment.

## Claims

1. A process for the regeneration, using flue gas as regeneration gas, of a catalyst deactivated by coke deposition in a multiple-zone fixed-bed conversion process in which each zone may serve for feed conversion or catalyst regeneration, in which the flue gas prior to use in regeneration is subjected to heat exchange and filtering, characterized in that said conversion process is the conversion of an olefin feed to gasoline and distillate using a zeolite catalyst and the source of the regeneration gas is the flue gas continuously produced from the regenerator of a fluid catalytic cracking unit, that a portion of said flue gas is cooled by indirect heat exchange with said feed, deactivated catalyst is contacted under regeneration conditions in a zone serving for catalyst regeneration with particle-free regeneration gas which comprises part of said cooled flue gas, the effluent gas from said zone is combined with the remaining part of said cooled flue gas and the remaining portion of the uncooled flue gas, and the combined gases are discharged without recylcing, the oxygen content of said flue gas, before its use as regeneration gas, being adjusted by addition to it of air, an inert gas such as nitrogen, or fuel gas, to between 0.1 and 1.5% volume.

2. A process according to claim 1 wherein addition of air to said flue gas is effected by means of an air compressor associated with said regenerator.

3. A process acording to claim 1 or claim 2 wherein, before cooling, said flue gas as at a temperature of 593 to 788°C and a pressure of 2.4 to 3.8 bar.

4. A process according to any preceding claim wherein said regeneration gas is at a temperature of 371 to 538°C and a pressure of 2.05 to 3.43 bar.

5. A process according to any preceding claim wherein, before discharge, said combined gases are cooled by means of a flue gas cooler associated with said regenerator.

6. A process according to any preceding claim wherein, while one of said zones serves for the regeneration another serves for conversion of feed preheated by said heat exchange.

7. A process according to any preceding claim wherein the zeolite has a constraint index of 1 to 12.

8. A process according to any preceding claim wherein the zeolite has the structure of zeolite ZSM-5.

## Patentansprüche

1. Verfahren zur Regenerierung eines Katalysators, wobei Rauchgas als Regenerierungsgas verwendet wird, der durch Koksablagerung in einem Umwandlungsverfahren mit Festbett mit einer Vielzahl von Zonen deaktiviert wurde, wobei in diesem Verfahren jede Zone zur Umwandlung der Zufuhr oder zur Katalysatorregenerierung dienen kann, bei dem das Rauchgas vor der Verwendung in der Regenerierung einem Wärmeaustausch und der Filatration unterzogen wird, dadurch gekennzeichnet, daß das Umwandlungsverfahren die Umwandlung einer Olefinzufuhr in Benzin und ein Destillat ist, wobei ein Zeolithkatalysator verwendet wird, und die Quelle des Regenerierungsgases Rauchgas ist, das kontinuierlich vom Regenerator einer katalytischen Wirbelschicht-Crackanlage erzeugt wird, daß ein Teil des Rauchgases durch indirekten Wärmeaustausch mit der Zufuhr abgekühlt wird, der deaktivierte Katalysator unter Regenerierungsbedingungen in einer Zone, die der Katalysatorregenerierung dient, mit einem von Partikeln freien Regenerierungsgas in Kontakt gebracht wird, das einen Teil des gekühlten Rauchgases umfaßt, das Abgas aus dieser Zone mit dem verbleibenden Teil des gekühlten Rauchgases und dem verbleibenden Teil des ungekühlten Rauchgases kombiniert wird, und diese kombinierten Gase ohne Rezirkulierung abgegeben werden, wobei der Sauerstoffgehalt des Rauchgases vor dessen Verwendung als Regenerierungsgas auf 0,1 bis 1,5 Vol-% eingestellt wird, indem ihm Luft, ein Inertgas wie Stickstoff oder Rauchgas zugegeben wird.

2. Verfahren nach Anspruch 1, worin die Zugabe von Luft zum Rauchgas mit einem Luftkompressor durchgeführt wird, der mit dem Regenerator verbunden ist.

3. Verfahren nach Anspruch 1 oder 2, worin das Rauchgas vor dem Abkühlen bei einer Temperatur von 593 bis 788°C und einem Druck von 2,4 bis 3,8 bar vorliegt.

4. Verfahren nach einem der vorstehenden Ansprüche, worin das Regenerierungsgas eine Temperatur von 371 bis 538°C und einen Druck von 2,05 bis 3,43 bar hat.

5. Verfahren nach einem der vorstehenden Ansprüche, worin die kombinierten Gase vor der Abgabe durch einen Rauchgaskühler abgekühlt werden, der mit dem Regenerator verbunden ist.

6. Verfahren nach einem der vorstehenden Ansprüche, worin, wenn eine der Zonen der Regenerierung dient, die andere der Umwandlung der Zufuhr dient, die durch den Wärmeaustausch vorgewärmt wurde.

7. Verfahren nach einem der vorstehenden Ansprüche, worin der Zeolith einen Zwangsindex von 1 bis 12 aufweist.

8. Verfahren nach einem der vorstehenden Ansprüche, worin der Zeolith die Struktur von Zeolith ZSM-5 aufweist.

## Revendications

1. Un procédé de régénération avec utilisation de gaz effluent comme gaz de régénération, d'un catalyseur désactivé par dépôt de coke dans un procédé de conversion en lit fixe à zones multiples, dans lequel chaque zone peut servir à la conversion de la charge ou à la régénération du catalyseur, dans lequel, avant son utilisation pour la régénération, le gaz effluent est soumis à un échange thermique et à une filtration, caractérisé en ce que ce procédé de conversion est le procédé de conversion d'une charge d'oléfine en essence et en distillat utilisant un catalyseur à base de zéolite et la source de régénération de gaz est le gaz effluent produit en continu à partir du régénérateur d'une installation de craquage catalytique en lit fluide, une partie de ce gaz effluent est refroidi par échange thermique indirect avec cette charge, le catalyseur désactivé est mis au contact, dans des conditions de régénération, dans une zone servant à la régénération du catalyseur, avec du gaz de régénération exempt de particules qui comprend une partie de ce gaz effluent refroidi, le gaz effluent provenant de cette zone est rassemblé avec la partie restante de ce gaz effluent refroidi et la partie restante du gaz effluent non refroidi, et les gaz rassemblés sont évacués sans recyclage, la teneur en oxygène de ce gaz effluent étant, avant son utilisation comme gaz de régénération, ajustée par addition à celui-ci d'air, d'un gaz inerte tel que l'azote, ou de gaz combustible à une valeur comprise entre 0,1 et 1,5% en volume.

2. Un procédé selon la revendication 1, caractérisé en ce que l'addition d'air à ce gaz effluent est effectuée au moyen d'un compresseur d'air associé à ce régénérateur.

3. Un procédé selon la revendication 1 ou 2, caractérisé en ce que, avant refroidissement, ce gaz effluent se trouve à une température de 593 à 788°C et à une pression de 2,4 à 3,8 bars.

4. Un procédé selon l'une quelconque des revendications précédentes, caractérisé en ce que ce gaz de régénération se trouve à une température de 371 à 538°C et à une pression de 2,05 à 3,43 bars.

5. Un procédé selon l'une quelconque des revendications précédentes, caractérisé en ce que, avant évacuation, ces gaz réunis sont refroidis au moyen d'un refroidisseur de gaz d'effluent associé à ce régénérateur.

6. Un procédé selon l'une quelconque des revendications précédentes, caractérisé en ce que, alors que l'une de ces zones sert à la régénération, une autre zone sert à la conversion de la charge préchauffée par cet échange thermique.

7. Un procédé selon l'une quelconque des revendications précédentes, caractérisé en ce que l'indice de contrainte de la zéolite est compris entre 1 et 12.

8. Un procédé selon l'une quelconque des revendications précédentes, caractérisé en ce que la structure de la zéolite est celle de la zéolite ZSM-5.

FIG. 1

EP 0 312 344 B1

## FIG. 2